# EUROPÄISCHE PATENTSCHRIFT

(11) **EP 2 625 757 B1**
(45) Veröffentlichungstag und Bekanntmachung des Hinweises auf die Patenterteilung: **02.07.2014**
(21) Anmeldenummer: 11763954.2
(22) Anmeldetag: 03.10.2011
(51) Int. Cl.: H02B 1/36, H02B 11/127

(54) **VERRIEGELUNGSVORRICHTUNG FÜR EINSCHÜBE FÜR ELEKTRISCHE SCHALTSCHRÄNKE**
LOCKING APPARATUS FOR WITHDRAWABLE UNITS FOR ELECTRICAL SWITCHGEAR CABINETS
DISPOSITIF DE VERROUILLAGE DE TIROIRS POUR ARMOIRES DE COMMANDE ÉLECTRIQUES

(30) Priorität: 08.10.2010 CH 16622010
(43) Veröffentlichungstag der Anmeldung: 14.08.2013
(73) Patentinhaber: Weber AG, 6020 Emmenbrücke (CH)
(72) Erfinder: PETRONGOLO, Walter, CH-6014 Luzern (CH)
(74) Vertreter: Rutz, Andrea
(86) Internationale Anmeldenummer: PCT/EP2011/067217
(87) Internationale Veröffentlichungsnummer: WO 2012/045696

(56) Entgegenhaltungen:
- WO-A1-02/087037
- DE-A1- 2 515 164
- US-A- 3 188 414

## Beschreibung

### TECHNISCHES GEBIET

Die vorliegende Erfindung betrifft einen Verriegelungsmechanismus für einen Ganzeinschub oder einen Teileinschub, insbesondere für einen Ganzeinschub oder Teileinschub mit elektrischen, optischen und/oder elektronischen Bauteilen, bei welchem am rückseitigen Ende des Einschubs elektrische, optische und/oder elektronische Verbindungselemente angeordnet sind.

### STAND DER TECHNIK

Elektrische Verteilereinheiten umfassen häufig elektrische und elektronische Baugruppen, welche in modular aufgebauten Schaltschränken angeordnet sind und bei welchen in einem Schaltschrank z.B. auf einer horizontalen Ebene im Rahmen von Moduleinschüben, einzelne, häufig nebeneinander angeordnete, schubladenartige Einschübe vorhanden sind. Die einzelnen Einschübe sind für einzelne Verbraucher oder für einzelne Aspekte von einzelnen Verbrauchern zuständig, und verfügen auf ihrer Vorderseite beispielsweise über Anzeigeelemente über den Betriebszustand (Stromverbrauch, Spannung, etc.) respektive den Schaltzustand der zugehörigen Verbraucher, über manuell betätigbare Schaltelemente, Sicherungen, etc. Die einzelnen Einschübe können dabei typischerweise unter Verwendung eines üblicherweise bügelförmigen Handgriffes aus dem Moduleinschub respektive aus dem Schaltschrank zur Wartung, Auswechslung einer Sicherung, Modifikation von einzelnen im Innenraum des Teileinschubs angeordneten Bauelementen oder ähnlichem ganz oder teilweise aus dem Moduleinschub herausgezogen werden. Ein derartiger Einschub ist aus der DE 2 515 164 bekannt.
Da die Teileinschübe mit Sammelschienen oder anderen Elementen (beispielsweise Steuerleitungen etc.), die auf der Rückseite des Schaltschranks angeordnet sind, über elektrische oder optische Verbindungsmittel (Kabel, Stecker) in Kontakt stehen, muss sichergestellt werden, dass der Einschub nur im Rahmen von klar definierten und sicherheitstechnisch zugelassenen Positionen verschoben werden kann. Es muss mit anderen Worten sichergestellt sein, dass ein solcher Einschub nicht in gefährlicher Weise manipuliert werden kann, indem er beispielsweise ungewollt vollständig herausgezogen oder hineingezogen wird. Dabei reicht es in der Regel nicht, dass ein solcher Einschub vollständig abgeschlossen werden kann, sondern es sollten definierte Zwischenpositionen zur Verfügung stehen, welche aber nur in kontrollierter Art und Weise abgefahren respektive erreicht werden können. Diese Zwischenpositionen sollen in manipulationssicherer Weise konstruktiv einfach ermöglicht werden.

### DARSTELLUNG DER ERFINDUNG

Es ist entsprechend u.a. Aufgabe der Erfindung, einen differenzierten Verriegelungsmechanismus für einen Einschub, insbesondere für die oben genannten Anwendungen, zur Verfügung zu stellen, welcher in klar definierter Weise unterschiedliche Verriegelungspositionen ermöglicht, konstruktiv einfach ausgelegt ist und den bei derartigen elektrischen, elektronischen, und/oder optischen Anwendungen höchsten sicherheitstechnischen Anforderungen gerecht wird.

Konkret betrifft die vorliegende Erfindung also eine Verriegelungsvorrichtung nach Anspruch 1, d.h. für einen Einschub, insbesondere für einen Einschub eines elektrischen und/oder elektronischen und/oder optischen Schaltschranks, welcher in einer Führung, typischerweise einer Führungsschiene, mit mehreren Einrastöffnungen verschieblich gelagert ist, wobei die Verriegelungsvorrichtung über einen von außen zugänglichen Druckknopf, Drehknopf oder Schieber betätigbar ist.

Es kann sich bei diesem Einschub um einen einzelnen so genannten Ganzeinschub handeln, welcher sich über die ganze Breite des Schaltschranks erstreckt. In diesem Fall verfügt der Einschub typischerweise auf beiden Seiten über eine derartige Verriegelungsvorrichtung, d.h. auf beiden Seiten gibt es normalerweise einen Griff mit einem entsprechenden Druckknopf. Bei einem solchen Einschub kann es sich aber auch, wie dies im Zusammenhang mit dem Ausführungsbeispiel weiter unten erläutert wird, um einen Teileinschub handeln, d.h. um einen Einschub in einer Situation, wo auf einer Höhe nebeneinander im Schaltschrank in einem gemeinsamen Rahmen mehrere derartige Einschübe angeordnet sind. In einem derartigen Fall verfügt normalerweise jeder Teileinschub nur über eine derartige Verriegelungsvorrichtung.

Die Verriegelungsvorrichtung ist dabei insbesondere dadurch gekennzeichnet, dass am respektive im Einschub ein mit dem Druckknopf über ein Kupplungselement in Wirkverbindung stehendes Verriegelungselement angeordnet ist, welches am Einschub entlang einer ersten, im wesentlichen senkrecht zu einer Einschubrichtung Z verlaufenden ersten Verschiebungsrichtung Y verschieblich gelagert ist und welches unter Verschiebung des Einschubs entlang der Einschubrichtung Z in unterschiedlichen Verriegelungspositionen mit stationären Einrastöffnungen in verriegelnden Eingriff gebracht werden kann. Zudem ist das Verriegelungselement seinerseits nicht direkt am Einschub befestigt, sondern in einem Entriegelungsschieber entlang der ersten Verschiebungsrichtung Y verschieblich gelagert. Dieser Entriegelungsschieber ist am respektive im Einschub seinerseits entlang einer zweiten, senkrecht zur Einschubrichtung Z und senkrecht zur ersten Verschiebungsrichtung Y verlaufenden Verschiebungsrichtung X gelagert.

Das Verriegelungselement ist also mittelbar über den Entriegelungsschieber am Einschub gelagert, so dass das diese beiden Elemente tragende Verriegelungsbauteil das Verriegelungselement entlang zwei orthogonalen Achsen, die beide senkrecht zur Einschubrichtung stehen, verschieblich trägt.

Diese beiden Elemente, Verriegelungselement und Entriegelungsschieber, sind dabei so ausgestaltet und relativ zueinander angeordnet, dass das Verriegelungselement bei Betätigung des Druckknopfes oder Schiebers aus dem verriegelnden Eingriff verschoben wird, und bei betätigtem Druckknopf respektive Schieber über an der Führung vorgesehene stationäre Verschiebungselemente, welche den Entriegelungsschieber entlang der zweiten Verschiebungsrichtung versetzen (und dadurch auch das im Entriegelungsschieber gelagerte Verriegelungselement versetzen), das Verriegelungselement wieder freigegeben wird, so dass bei Verschiebung des Einschubs entlang der Einschubrichtung Z das Verriegelungselement bei Erreichen der nächsten Verriegelungsposition in die nächste Einrastöffnung einrastet, selbst wenn der Druckknopf gedrückt gehalten ist.

Durch diese Konstruktion wird sichergestellt, dass, wenn der Einschub durch Drücken des Druckknopfs zum Lösen einer Verriegelungsposition gelöst wird und der Druckknopf gedrückt gehalten bleibt, der Einschub nicht einfach vollständig freigegeben wird (wodurch beispielsweise ein gefährliches vollständiges herausreißen oder einschieben des Einschubs möglich wäre), sondern nur bis zum Erreichen einer nächsten Verriegelungsposition. Durch die seitliche Verschiebung des Entriegelungsschiebers vor Erreichen der Verriegelungsposition wird gewissermassen das Verriegelungselement wieder freigegeben und kann erst dann, wenn es einmal erneut in die nächste Verriegelungsausnehmung eingerastet ist, wieder gelöst werden, wenn der Druckknopf nochmals völlig losgelassen wird und erneut hereingedrückt wird. Diese gewissermassen gestufte oder differenzierte Verriegelung ist wirksam sowohl beim hineinschieben des Einschubs als auch beim herausziehen des Einschubs.

Gemäß einer ersten bevorzugten Ausführungsform ist eine derartige Verriegelungsvorrichtung dadurch gekennzeichnet, dass es sich beim Kupplungselement um eine Schubstange handelt, welche über eine Kulisse mit einem in Einschubrichtung vorderseitig (das heißt in Richtung Z+) angeordneten Verriegelungsabschnitt (normalerweise ein tiefer Abschnitt der Kulisse) und einem in Einschubrichtung rückseitig (d.h. in Richtung Z-) angeordneten Entriegelungsabschnitt (normalerweise ein erhöhter Abschnitt der Kulisse) verfügt.

Weiterhin bevorzugtermassen verfügt das Verriegelungselement über zwei entlang der zweiten Verschiebungsrichtung X versetzte Gegenkulissen, wobei je nach Position des Entriegelungsschiebers entlang der zweiten Verschiebungsrichtung X die erste oder die zweite Gegenkulisse mit der Kulisse der Schubstange fluchtend angeordnet ist. So wird gewissermassen durch die Verschiebung des Entriegelungsschiebers bestimmt, welche der Gegenkulissen in Wechselwirkung mit der Kulisse der Schubstange steht. Bevorzugtermassen ist dabei der Verriegelungsabschnitt auf einem näher bei der Einrastöffnung angeordneten Niveau in der ersten Verschiebungsrichtung Y angeordnet als der Entriegelungsabschnitt. Der Verriegelungsabschnitt kann bei nicht betätigtem Druckknopf respektive Schieber mit der Gegenkulisse in Kontakt sein, wenn das Verriegelungselement eingerastet ist. Typischerweise liegt aber das Verriegelungselement in dieser Position an einem Anschlag im Entriegelungsschieber auf. Durch hineindrücken des Druckknopfs wird dabei der Entriegelungsabschnitt mit der Gegenkulisse in Kontakt gebracht.

Eine weitere bevorzugte Ausführungsform ist dadurch gekennzeichnet, dass das Verriegelungselement gewissermassen gabelförmig oder U-förmig ausgebildet ist, und die Gegenkulissen zwischen den beiden Armen des Verriegelungselements angeordnet sind. Bevorzugtermassen ist dabei dann eine erste Gegenkulisse auf einem näher bei der Einrastöffnung angeordneten Niveau in der ersten Verschiebungsrichtung Y angeordnet und eine zweite Gegenkulisse auf einem weiter von der Einrastöffnung angeordneten Niveau in der ersten Verschiebungsrichtung Y, wobei die erste Gegenkulisse ohne Einwirkung eines Verschiebungselementes mit der Schubstange fluchtend angeordnet ist und die zweite Gegenkulisse unter Einwirkung eines Verschiebungselementes zur der Schubstange fluchtend verschoben wird. Bevorzugtermassen ist dann die Höhe des Entriegelungsabschnitts über der Führungslasche der Führung größer als der Abstand zwischen einer Auflagefläche des Verriegelungselements und der ersten Gegenkulisse.

Dies führt dazu, dass, wenn die aktive seitliche Verschiebung durch die Verschiebungselemente nicht mehr wirkt, der Entriegelungsschieber unter Einwirkung der entsprechenden entlang der zweiten Verschiebungsrichtung X wirkenden Feder zurück verschoben wird, nicht wiederum die erste Gegenkulisse fluchtend mit der Schubstange angeordnet wird, sondern dass gewissermassen die Schubstange das Verriegelungselement fluchtend mit der zweiten Gegenkulisse gefangen hält.

Bevorzugtermassen ist in diesem Zusammenhang erste Verschiebungsrichtung Y in vertikaler Richtung im Raum angeordnet, und die zweite Verschiebungsrichtung X in horizontaler Richtung im Raum angeordnet.

Eine weitere bevorzugte Ausführungsform ist dadurch gekennzeichnet, dass das Verriegelungselement insbesondere über eine Feder, vorzugsweise über eine Blattfeder oder eine Spiralfeder, in der ersten Verschiebungsrichtung Y gegen die Führung, insbesondere gegen eine Führungslasche davon, verspannt ist.

Eine weitere bevorzugte Ausführungsform ist dadurch gekennzeichnet, dass der Entriegelungsschieber insbesondere über eine Feder, vorzugsweise über eine Blattfeder oder eine Spiralfeder, in der zweiten Verschiebungsrichtung X gegen die Führung, insbesondere gegen die Seitenwand der Führung respektive die daran angeordneten Verschiebungselemente, verspannt ist.

Gemäß einer weiteren Ausführungsform der Verriegelungsvorrichtung ist am Einschub ein Verriegelungsbauteil befestigt, welches ein Gehäuse aufweist, vorzugsweise aus zwei miteinander verbundenen Gehäuseelementen. Bevorzugtermassen ist in einem derartigen Gehäuse eine wenigstens einseitig offene Ausnehmung vorhanden, in welcher der Entriegelungsschieber entlang der zweiten Verschiebungsrichtung X verschieblich gelagert ist. Bevorzugtermassen sind dann im Gehäuse erste Führungsmittel, insbesondere in Form von Nuten, angeordnet, in welche korrespondierende am Entriegelungsschieber vorgesehene zweite Führungsmittel, insbesondere in Form von Führungszapfen, eingreifen, so dass die Führungsmittel ausschließlich eine Verschiebung des Entriegelungsschiebers entlang der zweiten Verschiebungsrichtung X innerhalb definierter Grenzen ermöglichen.

Weiterhin bevorzugtermassen sind zusätzlich am Entriegelungsschieber Mittel vorgesehen, über welche am Entriegelungsschieber eine Blattfeder befestigt werden kann, welche gegen die geschlossenseitige Wandung der Ausnehmung im Gehäuse verspannt.

Der Entriegelungsschieber kann bevorzugtermassen auf seiner den Verschiebungselementen zugewandten Seite über eine in der zweiten Verschiebungsrichtung X zur Führung hervortretende Erweiterung, insbesondere in Form einer gekrümmt oder gestuft ausgebildeten, sich entlang der ersten Verschiebungsrichtung erstreckenden Rippe, verfügen. Diese Erweiterung dient der kontrollierten Wechselwirkung mit dem Verschiebungselement an der Laufschiene.

Üblicherweise umfasst die Führung eine im wesentlichen in einer horizontalen Ebene liegende Führungslasche mit darin angeordneten Einrastöffnungen, sowie eine im wesentlichen in einer vertikalen Ebene und bezüglich Einschub weiter außen angeordnete Seitenwand. Führungslasche und Seitenwand können dabei in Form eines L-Profils ausgebildet sein. Dabei gleitet typischerweise das Verriegelungsbauteil der Verriegelungsvorrichtung auf der Führungslasche.

Gemäß einer bevorzugten Ausführungsform sind die Verschiebungselemente in Form von diskreten Freiauslösungskuppen in der Seitenwand und in Richtung zum Einschub über diese hinausragend angeordnet.

Eine weitere bevorzugte Ausführungsform ist dadurch gekennzeichnet, dass der Entriegelungsschieber eine bevorzugtermassen als Durchgangsöffnung in der ersten Verschiebungsrichtung Y ausgebildete Ausnehmung für das Verriegelungselement aufweist, wobei bevorzugtermassen der Entriegelungsschieber in der Ausnehmung über Mittel zur Lagerung einer Blattfeder für das Verriegelungselement verfügt.

Weiterhin bevorzugtermassen verfügt die Ausnehmung wenigstens abschnittsweise über Führungselemente, insbesondere in Form von Nuten und/oder Rippen, welche derart mit korrespondierenden Führungselementen des Verriegelungselements in Eingriff stehen, dass das Verriegelungselement nur entlang der ersten Verschiebungsrichtung Y im Entriegelungsschieber verschoben werden kann.

Weiterhin vorzugsweise ist zusätzlich am Entriegelungsschieber wenigstens eine Anschlagfläche vorgesehen, welche unter Wechselwirkung mit einer korrespondierenden, am Verriegelungselement vorgesehenen Anschlagfläche (beispielsweise seitliche Schulter) einen Anschlag in der ersten Verschiebungsrichtung Y für das Verriegelungselement im verriegelnden Zustand gewährleistet.

Bevorzugtermassen handelt es sich beim Kupplungselement um eine Schubstange, welche über einen in einem bügelförmigen Handgriff angeordneten Druckknopf von außen betätigt werden kann, wobei diese Schubstange mit einer Rückstellfeder, vorzugsweise in Form einer Spiralfeder, zum Beispiel als Zugfeder oder Druckfeder, gegen die Einschubrichtung verspannt ist.

Weiterhin bevorzugtermassen verfügt der Entriegelungsschieber über eine in Einschubrichtung Z verlaufende Durchgangsöffnung, in welcher das Kupplungselement in Form einer Schubstange geführt ist. Im Gehäuse und/oder im Entriegelungsschieber kann ein vorderer Anschlagspunkt für die Schubstange angeordnet sein, typischerweise wird der vorderer Anschlagspunkt aber durch den Druckknopf an der Modulfront vorgegeben. Die Schubstange kann an ihrem vorderseitigen freien Ende über einen vorderen Führungsabschnitt zum geführten Eingriff in der Durchgangsöffnung verfügen.

Zudem betrifft die vorliegende Erfindung einen Einschub für eine elektrische und/oder elektronische und/oder optische Verteilereinheit, insbesondere in Form eines Schaltschrankes, mit einer Verriegelungsvorrichtung nach einem der vorhergehenden Ansprüche. Wie bereits einleitend erwähnt sind dabei bei einem Ganzeinschub bevorzugtermassen auf beiden Seiten derartige Verriegelungsvorrichtungen vorgesehen, und bei einem Teileinschub vorzugsweise pro Einschub nur eine einzige derartige Verriegelungsvorrichtung an einer oberen seitlichen Führung des Einschubs.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. Die Zeichnungen zeigen:

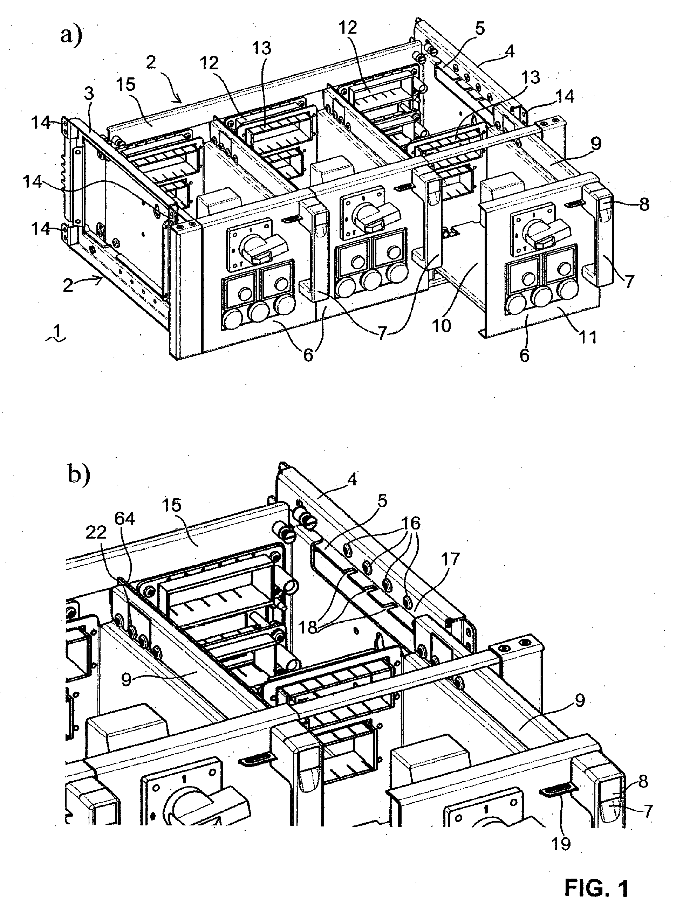

- Fig. 1: eine perspektivische Ansicht von vorne auf einen Moduleinschub mit drei Einschüben, wobei der am meisten rechts angeordnete Teileinschub teilweise aus dem Moduleinschub hinausgezogen ist und, wobei in a) das gesamte Moduleinschub und in b) nur der Führungsbereich des teilweise heraus gezogenen Teileinschubs dargestellt ist;

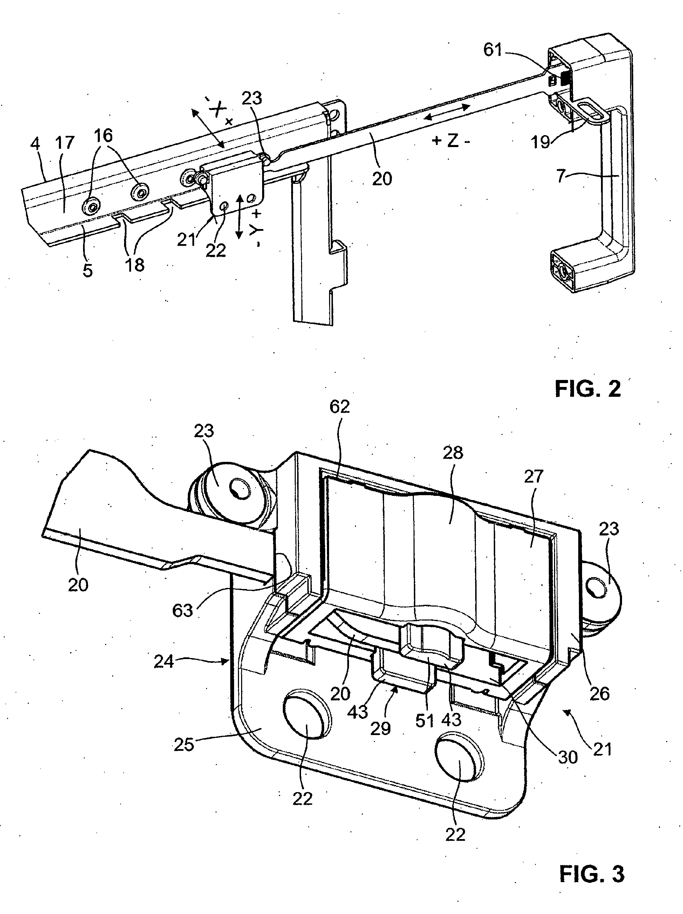

- Fig. 2: eine perspektivische Ansicht nur des Griffes, der Schubstange und des Verriegelungsbauteils eines Teileinschubes und der zugehörigen Modulträgerführung in der hinaus gezogenen Position;
- Fig. 3: eine perspektivische Ansicht von unten auf das Verriegelungsbauteil und die Schubstange in einer Position, wo der Verriegelungszapfen nach unten ausgefahren ist;

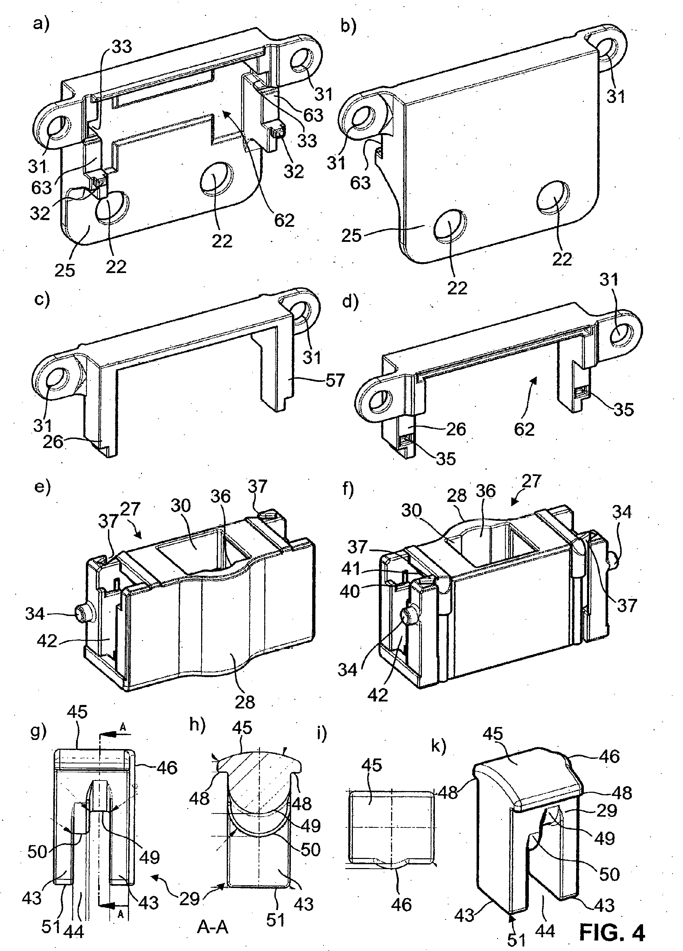

- Fig. 4: die einzelnen Elemente des Verriegelungsbauteils, wobei in a)-f) sowie k) jeweils perspektivische Ansichten von schräg oben dargestellt sind, und wobei in a) respektive b) das innenseitige Gehäuseelement von außen respektive von innen (relativ zum Teileinschub) dargestellt ist, in c) respektive d) das aussenseitige Gehäuseelement von außen respektive von innen (relativ zum Teileinschub) dargestellt ist, in e) respektive f) der Entriegelungsschieber von außen respektive von innen dargestellt ist, in g) eine seitliche Ansicht entlang der Einschubrichtung auf den Verriegelungszapfen dargestellt ist, in h) ein Schnitt entlang der Linie A-A in Figur 4g) durch den Verriegelungszapfen dargestellt ist, in i) eine Aufsicht von oben auf den Verriegelungszapfen dargestellt ist und in k) eine perspektivische Ansicht auf den Verriegelungszapfen dargestellt ist;

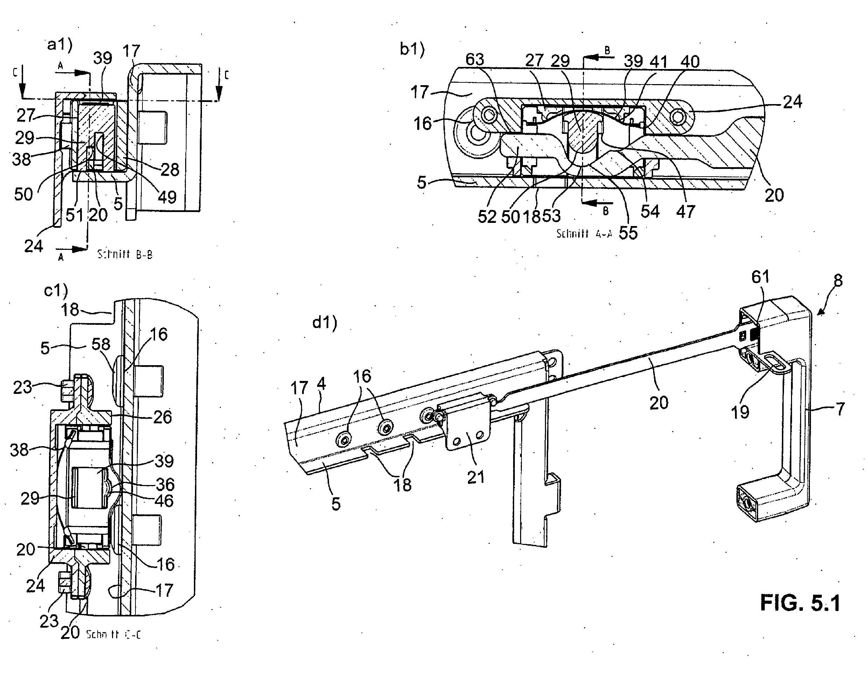

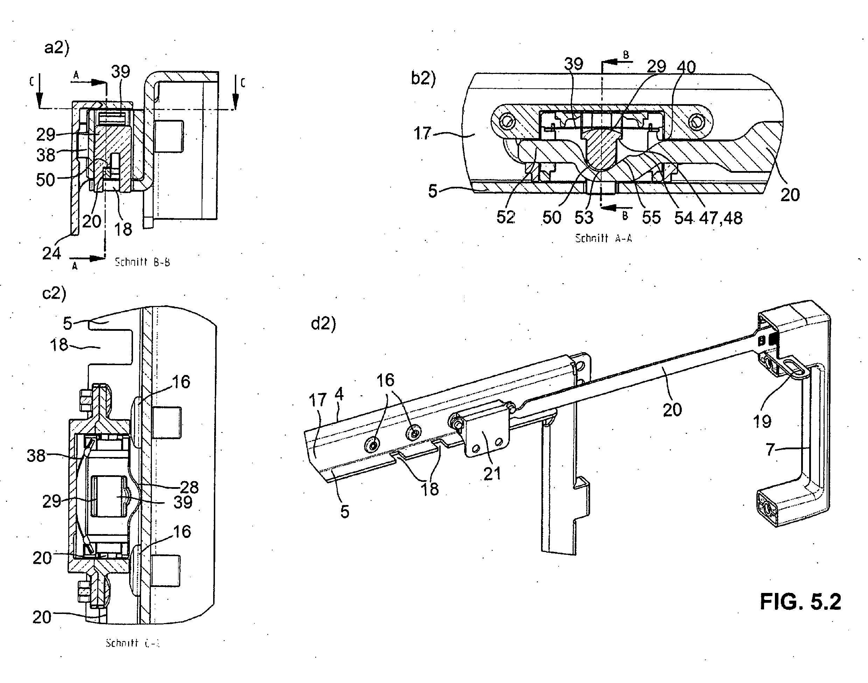

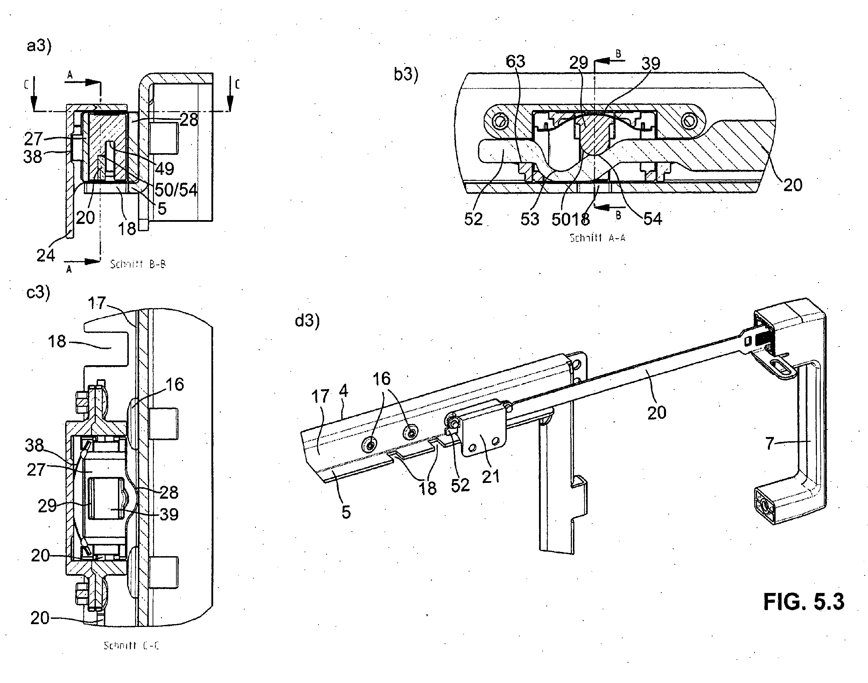

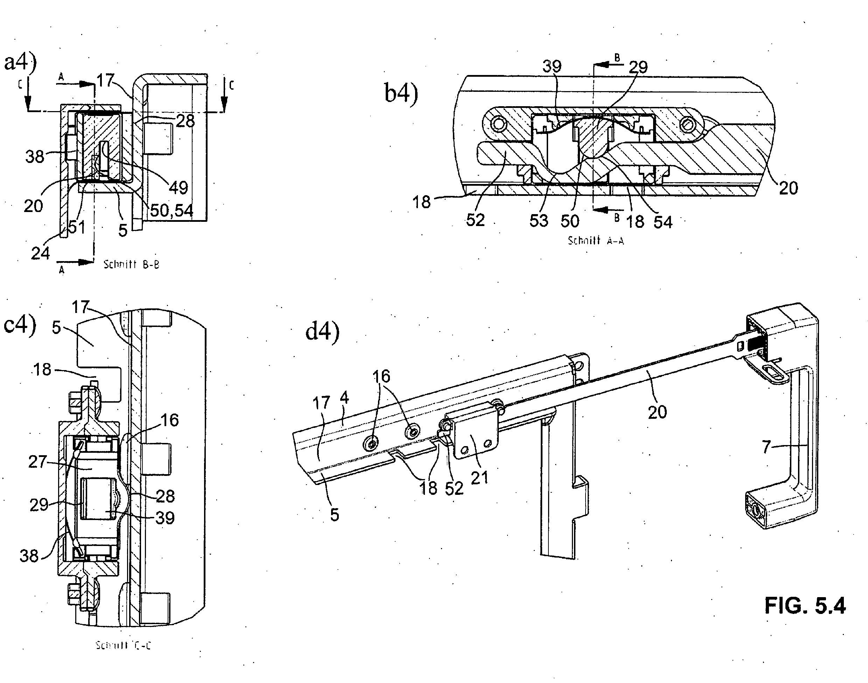

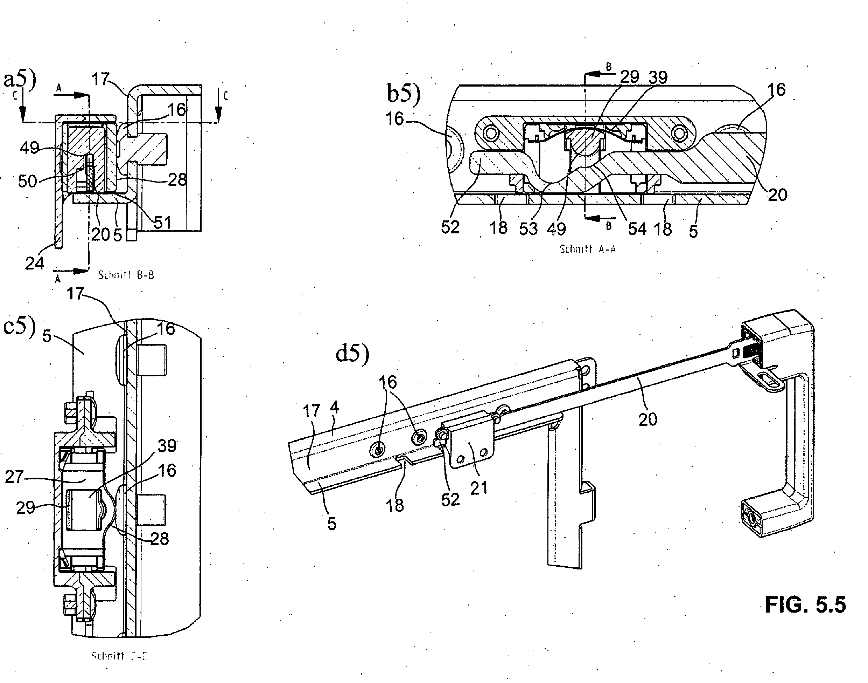

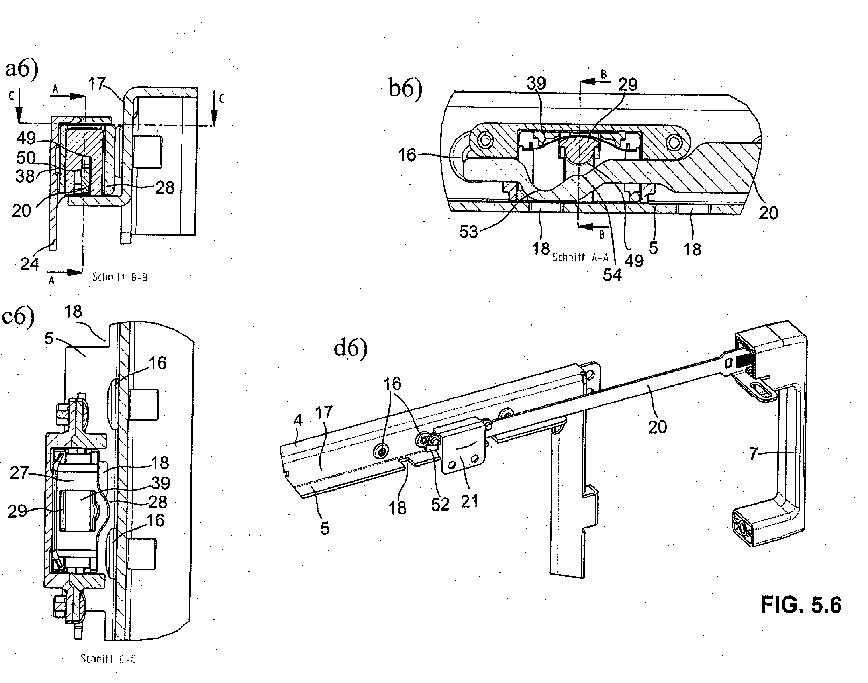

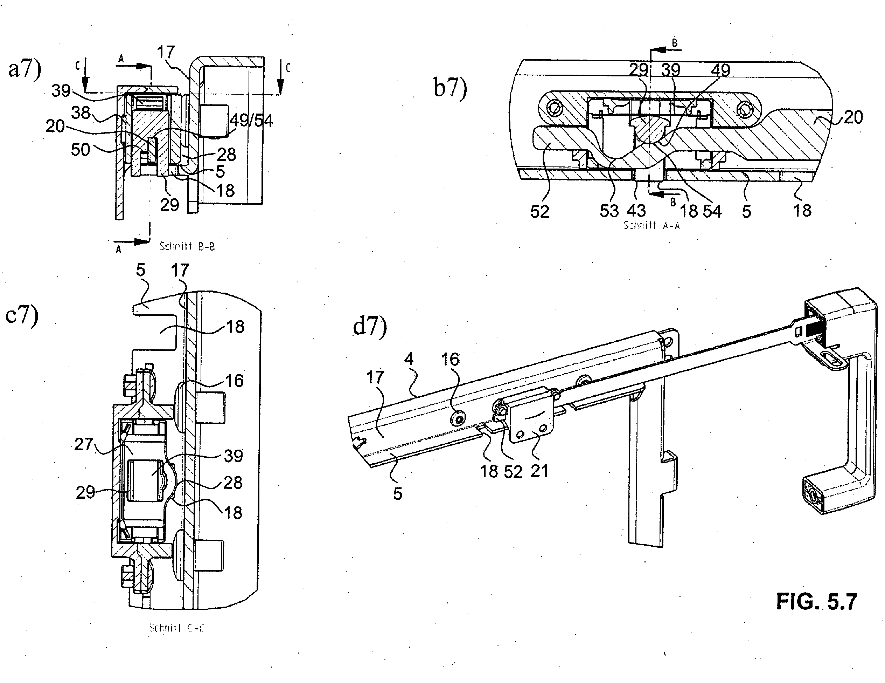

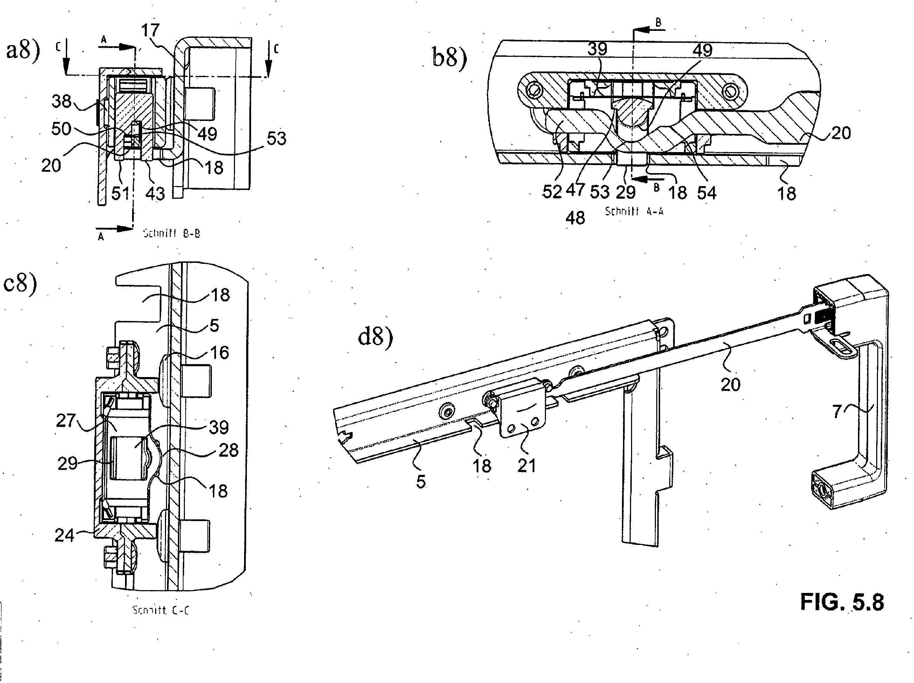

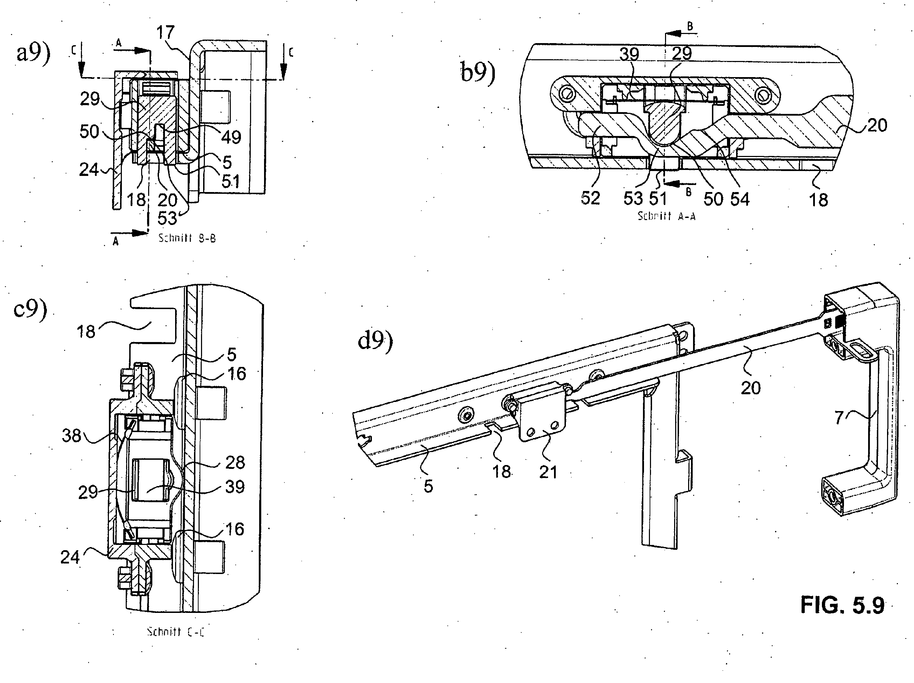

- Fig. 5: neun verschiedene Positionen (Fig. 5.1 - 5.9), wobei jeweils in a) ein Schnitt in einer Ebene XY senkrecht zur Einschubrichtung, in einer Ebene entlang der Linie B-B aus Figur b) dargestellt ist, in b) ein Schnitt in der Ebene YZ entlang der Linie A-A aus Figur a) dargestellt ist, in c) ein Schnitt in einer horizontalen Ebene XZ entlang der Linie C-C in Figur a) dargestellt ist und in d) eine perspektivische Ansicht dargestellt ist, wobei in Figur 5.1 die eingeschobene, nicht verriegelte Position mit zurückgezogener Schubstange dargestellt ist, in Figur 5.2 die verriegelte Position mit zurückgezogener Schubstange dargestellt ist, in Figur 5.3 die Position mit vorgeschobener Schubstange über einer Einrastöffnung dargestellt ist, in Figur 5.4 die Position mit vorgeschobener Schubstange zwischen zwei Verriegelungspositionen dargestellt ist, in Figur 5.5 die Position mit vorgeschobener Schubstange zwischen zwei Verriegelungspositionen mit versetztem Entriegelungsschieber dargestellt ist, in Figur 5.6 die Position zwischen zwei Verriegelungspositionen mit vorgeschobener Schubstange zwischen zwei Verriegelungspositionen mit nicht mehr aktiv versetztem Entriegelungsschieber dargestellt ist, in Figur 5.7 die verriegelte Position mit vorgeschobener Schubstange dargestellt ist, in Figur 5.8 in die verriegelte Position mit zurückgezogener Schubstange vor der vollständigen Zurückversetzung des Verriegelungsschiebers dargestellt ist, und in Figur 5.9 die verriegelte Position mit zurückgezogener Schubstange und mit vollständiger Zurückversetzung des Verriegelungsschiebers dargestellt ist.

### BESCHREIBUNG BEVORZUGTER AUSFÜHRUNGSFORMEN

Figur 1 zeigt einen Moduleinschub 1, in welchem in einem Rahmen 2 drei Teileinschübe 6 nebeneinander gewissermassen wie drei Schubladen gelagert sind. Ein derartiger Moduleinschub ist beispielsweise in einem Schaltschrank oder ähnlichem gelagert, und ein solcher Moduleinschub 1 verfügt über eine äussere Rahmenkonstruktion und ist über zwei Modulträgerführungen 3,4 geführt. Bei Teileinschüben sind diese jeweils über eine Zwischenwand 64 voneinander getrennt, und an diesen Zwischenwänden sind wiederum Führungen 5 vorgesehen. Zudem ist, abgesehen von einem frontseitigen Rahmen, auf der Rückseite eine Rückwand 15 vorgesehen, an welcher typischerweise elektrische Anschlusselemente 12 in Form von Steckern oder Kabelverbindungen vorgesehen sind. Die Modulträgerführungen können über Befestigungsmittel 14 an einem Schrankrahmen (nicht dargestellt) festgeschraubt werden.

Die einzelnen Teileinschübe, von welchen in Figur 1 der ganz rechts angeordnete in teilweise herausgezogenem Zustand dargestellt ist, verfügen üblicherweise an ihrer Vorderseite über bügelförmige Handgriffe 7, an der Vorderseite über ein Gerätepanel, in welchem die einzelnen Kontrollelemente resp. Schalter etc. angeordnet sind, sowie gegebenenfalls (im vorliegenden Beispiel nicht der Fall) über Anschlussmöglichkeiten wie Schnittstellen für Diagnosegeräte etc..

Derartige Teileinschübe 6 sind vor einem gefährlichen Manipulieren zu schützen, und können entsprechend nicht ohne weiteres am Handgriff 7 herausgezogen werden. Ein derartiger Teileinschub kann nur dann am Handgriff 7 nach vorne herausgezogen werden, wenn der im Handgriff angeordnete Druckknopf 8 beispielsweise mit dem Daumen nach innen gepresst wird. Dann wird der Teileinschub 6 gewissermassen freigegeben und kann, wie dies ganz rechts dargestellt ist, nach vorne gezogen werden..

Der Teileinschub verfügt über eine Verschalung und ist über eine Führungs an der oben genannten Modulträgerführung gelagert. Die Modulträgerführung 4 verfügt dazu über eine dem Teileinschub zugewandte Führungslasche 5, auf welcher Elemente der Führung vom Einschub 6 gleitend oder rollend laufen.

In Figur 1b ist der Führungsausschnitt im Detail dargestellt. Hier kann erkannt werden, wie die Modulträgerführung 4 in Form einer Profilschiene ausgebildet ist, welche einerseits über eine vertikale Seitenwand 17 verfügt, und andererseits über einen in einer horizontalen Ebene liegenden abgewinkelten Blechabschnitt als Führungslasche 5. In dieser Führungslasche 5 sind dabei Einrastöffnungen 18 in Form von sich typischerweise bis zur Seitenwand 17 erstreckenden Schlitzen ausgebildet. Versetzt zu diesen Schlitzen 18 sind in der Seitenwand 17 die sogenannten Freiauslösungskuppen 16 im Sinne von Verschiebungselementen angeordnet. Die Funktion und Wirkungsweise dieser Verschiebungselemente 16 wird weiter unten im Detail angegeben.

Jeder Teileinschub eines solchen Moduleinschubs 1 verfügt jeweils auf der oberen rechten Seite über eine Verriegelungsvorrichtung, wie sie weiter unten im Detail beschrieben werden soll. Mit anderen Worten verfügt auch die in Figur 1b weiter links dargestellte, und durch eine Zwischenwand 64 abgetrennte Teileinschubeinheit über eine Führung 4, wobei diese Elemente aber, weil dieser Teileinschub eingeschoben ist, teilweise verdeckt sind.

In Figur 2 ist nun nur noch die Modulträgerführung 4 sowie vom Teileinschub nur noch der Handgriff, eine mit dem Druckknopf 8 in Verbindung stehende Schubstange 20, sowie ein sogenanntes Verriegelungsbauteil 21, welches am Teileinschub über in Öffnungen 22 montierte Elemente festgeschraubt oder angenietet ist, dargestellt. Die Schubstange 20 stellt die koppelnde Wechselwirkung zwischen dem Druckknopf 8 und dem Verriegelungsbauteil 21 zur Verfügung. Sie ist als starre Blechstange ausgebildet und verfügt an ihrem handgriffseitigen Ende über eine Abschliesslasche 19. Wird durch diese Abschliesslasche 19 beispielsweise ein Vorhängeschloss gelegt, so kann der Druckknopf nicht mehr betätigt werden und entsprechend auch der Teileinschub 6 nicht mehr aus dem Moduleinschub 1 herausgezogen werden.

Für die weitere Diskussion der Funktionsweise der Verriegelungsvorrichtung werden in Figur 2 die wesentlichen Funktionsrichtungen definiert, namentlich gibt es eine Einschubrichtung Z, deren positive Richtung vom Handgriff 7 zum Verriegelungsbauteil zeigt. Des weiteren gibt es eine erste Verschiebungsrichtung oder vertikale Verschiebungsrichtung Y, deren positive Richtung nach oben zeigt. Zu guter letzt gibt es eine zweite oder seitliche Verschiebungsrichtung X, deren negative Richtung vom Verriegelungsbauteil zur Seitenwand 17 zeigt. Die drei Richtungen X, Y und Z stehen wechselseitig orthogonal zueinander.

Figur 3 zeigt das Verriegelungsbauteil 21, welches zusammen mit der Schubstange 20 und deren Ausbildung das Kernelement der vorgeschlagenen Verriegelungsvorrichtung darstellt. Das Verriegelungsbauteil 21 verfügt über ein komplettes Verriegelungsgehäuse 24 mit einem Verriegelungsgehäuse 25 (innenseitiges Gehäuseelement), welches die bereits oben erwähnten Öffnungen 22 für Befestigungselemente zur Befestigung am Teileinschub aufweist, sowie einen Deckel 26 (aussenseitiges Gehäuseelement). Die beiden Gehäuseelemente werden über Befestigungselemente 23 in Form von Nieten aneinander befestigt.

In einer zur Aussenseite hin und nach unten offenen Ausnehmung 62 in diesem Gehäuse 24 ist ein sogenannter Entriegelungsschieber 27 verschieblich gelagert. Namentlich ist dieser Entriegelungsschieber 27 in der oben definierten seitlichen Verschiebungsrichtung X im Rahmen definierter Grenzen verschieblich gelagert.

Dieser Entriegelungsschieber 27 dient seinerseits als Träger für die verschiebliche Lagerung eines Verriegelungselements in Form eines Verriegelungszapfens 29, dessen unteres Ende in Figur 3 nach unten aus dem Entriegelungsschieber 27 herausragt, und zwar mit zwei sogenannten Verriegelungsarmen. Der Verriegelungszapfen 29 ist in einer nach unten offenen Ausnehmung 30 des Entriegelungsschiebers 27 angeordnet, und entlang der ersten Verschiebungsrichtung Y im Entriegelungsschieber 27 innerhalb definierter Grenzen gelagert.

Die Schubstange 20 tritt durch eine Durchtrittsöffnung 63 in das Gehäuse hinein und durch eine in Figur 3 nicht sichtbare Öffnung 42 auch in den Entriegelungsschieber 27 und durch diesen hindurchtretend hindurch. Sie untergreift dabei den Zwischenraum zwischen den beiden Armen 43 des Verriegelungszapfens 29 und wird auf der gegenüberliegenden Seite (in Figur 3 verdeckt) des Gehäuses 24 wiederum in einer Durchtrittsöffnung 63 geführt (vgl. beispielsweise Figur 5.1b).

Die einzelnen Elemente des Verriegelungsbauteils 21 sind in Figur 4 einzeln im Detail dargestellt. Wie insbesondere unter Zuhilfenahme von den Figuren 4a und b erkannt werden kann, verfügt das Verriegelungsgehäuse 25 über Führungszapfen 32, mit welchen das Verriegelungsgehäuse 25 in defmierter Weise am Deckel 26 positioniert wird. Des weiteren verfügt es über in der zweiten Verschiebungsrichtung verlaufende Führungsnuten 33. In diese Führungsnuten 33 kommen die beiden Führungszapfen 34 des Entriegelungsschiebers 27 so zu liegen, dass letzterer nur in der zweiten Verschiebungsrichtung X im Gehäuse 24 verschieblich gelagert ist, und dies auch nur innerhalb der definierten Grenzen der Führungsnut 33, denn diese wird bei der Befestigung des aussenseitigen Gehäuseelementes 26 gewissermassen geschlossen.

In Figur 4c resp. d ist das aussenseitige Gehäuseelement dargestellt, hier sind die den Führungszapfen 32 korrespondierenden Führungsöffnungen 35 erkennbar.

In den Figuren 4e und f ist der Entriegelungsschieber 27 dargestellt. Hier kann erkannt werden, dass die Ausnehmung 30, deren Dimensionierung von der Unterseite in Figur 3 erkannt werden kann, hier von oben sichtbar ist. Nach oben ist diese Ausnehmung 30 ebenfalls offen, d.h. die Ausnehmung 30 ist eine Durchgangsöffnung in vertikaler Richtung. Dabei ist diese Ausnehmung 30 im obersten Bereich rechteckig ausgebildet mit einem vertikal verlaufenden Erweiterungsbereich 36 in Form einer Führungsnut. Dieser Führungsnut 36 korrespondierend ist am Verriegelungszapfen 29 eine Führungsrippe 46 in vertikaler Richtung vorhanden, dies als Orientierungsvorgabe für die Montage des Verriegelungszapfens 29.

Was in den Figuren 4e und f ebenfalls erkannt werden kann sind die zwei vorne und hinten angeordneten Befestigungsnuten 37 für die erste Blattfeder 38, mit welcher der Entriegelungsschieber 27 gegen die vom innenseitigen Gehäuseelement 25 gebildete Innenwand des Gehäuses in Richtung X verspannt ist. Auch erkennbar ist die Auflage 40 für die zweite Blattfeder 39, mit welcher der Verriegelungszapfen 29, insbesondere in Folge des Kontakts zwischen dieser Blattfeder 39 und der gekrümmten Oberseite 45 des Verriegelungszapfens 29, in Richtung Y (das heißt in einer Darstellung nach beispielsweise Figur 2 nach unten) verspannt ist.

In den Figuren 4g-k ist der Verriegelungszapfen 29 dargestellt. Dieser ist säulenförmig mit einem rechteckigen Querschnitt, und die Oberseite 45 ist als konvexe gekrümmte Fläche ausgebildet. Seitlich in Einschubrichtung auskragend sind dabei Schultern als Anschlagsebenen 48 für den unteren Anschlag des Verriegelungszapfens 29 in seiner Lagerung im Entriegelungsschieber 27 vorhanden. Wesentlich ist nun an diesem Verriegelungszapfen 29 seine u-förmige oder gabelförmige Ausbildung. Zwischen zwei Armen 43, die nach unten gerichtet sind, verfügt der Verriegelungszapfen 29 über einen in Einschubrichtung verlaufenden Schlitz 44, welcher gestuft ausgebildet ist. An seinem gewissermassen innenseitigen, d.h. dem Teileinschub zugewandten Arm ist dieser Schlitz weniger tief und nach oben begrenzt durch eine untere Gegenkulisse 50. Auf der Aussenseite, d.h. dem Teileinschub abgewandten Seite ist der Schlitz tiefer und nach oben begrenzt durch eine obere Gegenkulisse 49. Die beiden Kulissen 49 und 50 sind halbkreisförmig mit abgerundeten Kanten ausgebildet. Die beiden unteren Enden der Arme 43, welche unter anderem in Auflage mit der Führungslasche 5 kommen, sind als Auflageflächen 51 ausgebildet.

Die detaillierte und recht komplexe Wirkungsweise dieses Verriegelungsbauteils soll nun anhand der Figuren 5.1-5.9 in neun verschiedenen Betriebszuständen erläutert werden.

Dabei sind jeweils in den Figuren 5.1-5.9 Schnitte in Ebenen senkrecht zur Einschubrichtung (jeweils a), Schnitte senkrecht zur seitlichen Verschiebungsrichtung (jeweils b), Schnitte senkrecht zur vertikalen Verschiebungsrichtung (jeweils c), sowie eine perspektivische Ansicht (jeweils d) dargestellt, und gleiche Elemente werden mit den gleichen Bezugszeichen bezeichnet.

Figur 5.1 zeigt jenen Zustand, wenn der Teileinschub gerade in den Moduleinschub eingeschoben wurde. In diesem Zustand ist der Druckknopf 8 entspannt und damit die Schubstange 20 in ihrer am meisten in Richtung Z- verschobenen Position (beispielsweise in b ganz rechts). Der Verriegelungszapfen 29 gleitet mit seiner Auflagefläche 51 auf der Führungslasche 5, und ist über die zweite Blattfeder 39 nach unten gegen diese verspannt. Der Entriegelungsschieber 27 ist durch die erste Blattfeder 38 so weit wie möglich gegen die Seitenwand 17 gepresst und liegt mit der Rippe 28 gleitend an dieser an (vgl. insbesondere c). Damit ist der auf der Seite des Teileinschubs liegende Abschnitt des Schlitzes im Verriegelungszapfen 29 in Richtung X fluchtend mit der Schubstange 20 (vgl. insbesondere a) angeordnet. In dieser ganz zurückgezogenen Position der Schubstange 20 liegt dabei die in der Schubstange vorgesehene Kulisse 55 mit ihrem tiefsten Abschnitt 53 fluchtend unterhalb der unteren Gegenkulisse 50 des Verriegelungszapfens 29. Damit gibt es zwischen der Kulisse 55 der Schubstange resp. des Abschnitts 53 davon, und der unteren Gegenkulisse 50 des Verriegelungszapfens einen Abstand, der insbesondere in Figur 5.1b gut erkannt werden kann.

Schiebt man nun von dieser Position ausgehend den Teileinschub 6 weiter in den Moduleinschub 1 hinein, d.h. in Richtung Z+, d.h. in den perspektivischen Darstellungen gemäss d weiter nach links, so fluchtet irgendwann der Verriegelungszapfen 29 mit der ersten Einrastöffnung 18. Ist diese Position erreicht, so schnellt unter der Wirkung der zweiten Blattfeder 39 der Verriegelungszapfen 29 nach unten und greift in die Einrastöffnung 18 ein, der Verriegelungsmechanismus ist dann eingerastet. Dies ist die Position, die in Figur 5.2 dargestellt ist. Der Verriegelungszapfen 29 schnellt dabei soweit hinunter, bis er mit seinem Schultern 48 auf die entsprechenden Anschlagsflächen 47 im Entriegelungsschieber 27 zur Auflage kommt. Ohne spezifische Manipulation des Druckknopfes 8 ist der Teileinschub in der Position gemäss Figur 5.2 verriegelt.

Wird nun ausgehend von der Position in Figur 5.2 der Druckknopf 8 hinein gedrückt, so resultiert die in Figur 5.3 dargestellte Situation. Die Schubstange 20 verschiebt sich in Richtung Z+, d.h. in der Darstellung gemäss b weiter nach links, und die untere Gegenkulisse 50 wird in Folge der Kulisse 55 in Richtung Y+, d.h. nach oben, geschoben, bis die untere Gegenkulisse 50 auf den erhöhten Abschnitt 54 dieser Kulisse 55 zu liegen kommt, resp. bis der Druckknopf an einen Anschlagspunkt anschlägt. Geführt ist bei diesem Vorgang die Schubstange 20 unter anderem auch indem ein vorderer Führungsabschnitt 52 der Schubstange 20 in einer entsprechenden Durchtrittsöffnung 63 am vorderen Ende des Verriegelungsbauteils 21 und auf der Gegenseite des Verriegelungsbauteils geführt ist.

Damit ist der Verriegelungszapfen 29 nach oben angehoben gegen die Rückstellkraft der zweiten Feder 39 und ausser Eingriff gebracht mit der Einrastöffnung 18. Mit anderen Worten ist nun der Teileinschub für eine weitere Verschiebung entlang der Einschubrichtung Z freigegeben.

Verschiebt man nun aus dieser Position gemäss Figur 5.3 den Teileinschub noch weiter in Richtung Z+, d.h. nach links in der perspektivischen Ansicht gemäss d, so ist dies ohne Verschiebung in Richtung X+, d.h. ohne seitliche Verschiebung, möglich bis die Erweiterung 28 des Entriegelungsschiebers 27 auf eine Freiauslösungskuppe 16 auftrifft. Diese Position ist in Figur 5.4 dargestellt. Die Rippe 28 ist gerade noch im Anschlag mit der Seitenwand 17 und kommt mit ihrer vorderen Flanke in Kontakt mit der gekrümmt ausgebildeten Flanke der als Niete ausgebildeten Freiauslösungskuppe 16. Schiebt man nun den Teileinschub 6 noch weiter hinein, so wird in Folge der zur Seite abdrängenden Rippe 28 der Entriegelungsschieber 27 gegen die Rückstellkraft der ersten Blattfeder 38 in das Verriegelungsbauteil 21 hineingeschoben. Der dann erreichte Zustand ist in Figur 5.5 dargestellt. Die Erweiterung 28 liegt jetzt an der vorderen Fläche der Freiauslösungskuppe 16 auf, und der Entriegelungsschieber 27 ist ganz in das Verriegelungsgehäuse 24 des Verriegelungsbauteils 21 hineingeschoben.

Da die Schubstange 20 bei diesem Verschiebungsprozess nicht mitwandert, fluchtet nun aber, wie dies insbesondere anhand der Figur 5.5a erkannt werden kann, nicht mehr der dem Teileinschub zugewandte, d.h. linke Teil des Schlitzes des Verriegelungszapfens 29 mit der Kulisse 54 der Schubstange 20, sondern der viel tiefere Bereich mit der oberen Gegenkulisse 49. Damit ist der Verriegelungszapfen 29 nicht mehr durch die Schubstange 20 nach oben gepresst, sondern drückt nun wieder mit seinen Auflageflächen 51 auf die Führungslasche 5.

Schiebt man nun den Teileinschub 6 noch weiter in den Moduleinschub 1 hinein, so resultiert die Situation nach Figur 5.6. Zwar hat nun der Entriegelungsschieber 27 gewissermassen den Einflussbereich des Verschiebungselements 16 verlassen, da aber die Höhe der unteren Gegenkulisse 50 über der unteren Auflagefläche 51 etwas geringer gewählt wird, als die Höhe des erhöhten Abschnitts 54 der Kulisse der Schubstange 20, kann sich trotz in Figur 5.6a in Richtung X+, d.h. in den Figuren a6/c6 nach rechts, gerichteter Rückstellkraft der ersten Blattfeder 38 der Entriegelungsschieber 27 nicht in Richtung X+, d.h. in den Figuren a6/c6 nach rechts, verschieben, er ist gewissermassen durch den Abschnitt 54 im tieferen Schlitz mit der oberen Gegenkulisse 49 gefangen. Damit ist aber auch, wie dies anhand von Figur 5.6b erkannt werden kann, der Verriegelungszapfen nicht nach unten gesichert, d.h. es gibt in vertikaler Richtung einen Abstand zwischen dem Kulissenabschnitt 54 und der Gegenkulisse 49.

Entsprechend fällt dann auch, wie dies in Figur 5.7 dargestellt ist, der Verriegelungszapfen bei Erreichen einer nächsten Einrastöffnung 18 wieder eingreifend in diese hinein und verriegelt damit den Teileinschub 6 im Moduleinschub 1. Dies obwohl der Druckknopf 8 gedrückt gehalten blieb und eigentlich gewissermassen in der entriegelten Position ist.

In dieser in Figur 5.7 dargestellten Position ist der Teileinschub 6 nun vollständig verriegelt. Er kann mit anderen Worten durch ein noch weiteres hineinschieben des Druckknopfes nicht entriegelt werden. Die einzige Möglichkeit, den Teileinschub nun zu entriegeln ist, den Druckknopf 8 wieder vollständig los zu lassen und erneut vollständig hinein zu drücken. Unter Einwirkung der Rückstellfeder 61 verschiebt sich beim loslassen die Schubstange 20 in Richtung Z-, d.h. in der Darstellung gemäss Figur b wiederum nach rechts, was in einer Position gemäss 5.8 resultiert. Der in der Einrastöffnung gefangene Verriegelungszapfen 29 liegt nun mit seinen Schultern 48 auf den Auflageflächen 47 des Entriegelungsschiebers 27 auf und ist nicht mehr nach unten in seiner Beweglichkeit durch den erhöhten Abschnitt 54 begrenzt, sondern fluchtet mit dem tiefen Abschnitt 53 der Kulisse der Schubstange.

Figur 5.8 zeigt dabei nur gewissermassen einen kurzzeitig vorliegenden Zwischenzustand, denn unter der Einwirkung der ersten Blattfeder 38 verschiebt sich nun unverzüglich der Entriegelungsschieber 27 wieder zur Seitenwand 17 hin, was dazu führt, dass sich der Verriegelungszapfen 29 seitlich relativ zur Schubstange 20 verschiebt und in einer Endposition landet, wie sie in Figur 5.9 dargestellt ist: Der tiefe Abschnitt 53 fluchtet nun wieder mit dem weniger tiefen Schlitz im Verriegelungszapfen 29, d.h. mit der unteren Gegenkulisse 50. Damit kann nun mit einem erneuten Hineindrücken des Druckknopfes 8 die Schubstange 20, in Richtung Z+, d.h. in der Darstellung gemäss Figur 5.9b nach links, der Verriegelungszapfen 29 in Richtung Y+, in den Darstellungen der Figuren nach oben, geschoben werden, bis die untere Gegenkulisse 50 des Verriegelungselements 29 mit dem erhöhten Abschnitt 54 der Schubstange 20 entlang der Richtung Y fluchtend angeordnet ist. Dann ist der Teileinschub erneut entriegelt und man ist im Prinzip wieder in jener Position angelangt, welche in Figur 5.1 dargestellt ist.

**BEZUGSZEICHENLISTE**

| | | | |
|---|---|---|---|
| 1 | Moduleinschub | 25 | Verriegelungsgehäuse, innenseitiges Gehäuseelement |
| 2 | Modulträger umfassend Grundträger, Boden und Steckerplatte, Rahmen von 1, | | |
| | | 26 | Deckel von 24, aussenseitiges Gehäuseelement |
| 3 | linke Modulträgerführung | | |
| 4 | rechte Modulträgerführung | 27 | Entriegelungsschieber, seitlich (entlang zweiter Verschiebungsrichtung X) verschiebliches Innenelement, |
| 5 | Führungslasche von 4 | | |
| 6 | Teileinschub, Einschub | | |
| 7 | Handgriff von 6 | | |
| 8 | Druckknopf | | |
| 9 | Verschalung von 6 | 28 | Rippe/Erweiterung auf Außenseite von 27 |
| 10 | Innenraum von 6 | | |
| 11 | Frontplatte von 6 | 29 | Verriegelungszapfen, Verriegelungselement |
| 12 | Anschlusselemente an 2 | | |
| 13 | Anschlusselemente an 6 | 30 | Ausnehmung in 27 |
| 14 | Befestigungsmittel an 3/4 | 31 | Befestigungsöffnung in 25 respektive 26 |
| 15 | rückseitige Elemente | | |
| 16 | Freiauslösungskuppe, Verschiebungselement | 32 | Führungszapfen für relative Befestigung von 25 und 26 |
| 17 | Seitenwand von 4 | 33 | Führungsnut für seitliche Führung von 27 |
| 18 | Einrastöffnung in 5 | | |
| 19 | Abschliesslasche | 34 | Führungszapfen an 27 zur seitlichen Führung in Ausnehmung von 24 |
| 20 | Schubstange, Kupplungselement | | |
| 21 | Verriegelungsbauteil | 35 | Führungsöffnung |
| 22 | Befestigungsöffnung zur Befestigung von 21 an 6 | 36 | Führungsnut in 30 von 27 für 29 |
| 23 | Elemente zur Befestigung von 26 an 25 | 37 | Befestigungsnut für 38 an 27 |
| | | 38 | Blattfeder von 27, erste Blattfeder |
| 24 | Verriegelungsgehäuse komplett | | |
| | | 39 | Blattfeder von 29, zweite |
| | Blattfeder | 54 | erhöhter Abschnitt von Kulisse von 20 |
| 40 | Auflage für 39 | | |
| 41 | Gegendrucknase für 39 | 55 | Kulisse von 20 |
| 42 | Durchtrittsöffnung für 20 in 27 in Einschubrichtung Z | 57 | äußere Abschlussfläche von 24 |
| 43 | Verriegelungsarme von 29 | 58 | vordere Fläche von 16 |
| 44 | Nut in 29 für 20 | | |
| 45 | gekrümmte Oberseite von 29 | | |
| 46 | Führungsrippe in vertikaler (erste Verschiebungsrichtung Y) Richtung auf Außenseite von 29 | 61 | Rückstellfeder von 20 |
| | | 62 | Ausnehmung für 27 in 24 |
| | | 63 | Durchtrittsöffnung in 24 für 20 |
| 47 | Anschlagfläche an 27 für 48 in 30 | 64 | Zwischenwand zwischen einzelnen 6 |
| 48 | Anschlagsebene an 29 für Endanschlag auf 47 in erster Verschiebungsrichtung Y- | | |
| | | X | seitliche Verschiebungsrichtung, zweite Verschiebungsrichtung |
| 49 | obere Gegenkulisse in 44 von 29 | | |
| 50 | untere Gegenkulisse in 44 von 29 | Y | vertikale Verschiebungsrichtung, erste Verschiebungsrichtung |
| 51 | Auflagefläche von 29 auf 5 | | |
| 52 | vorderer Führungsabschnitt von 20 | Z | Einschubrichtung |
| 53 | tiefer Abschnitt von Kulisse von 20 | | |

## Patentansprüche

1. Verriegelungsvorrichtung für einen Einschub (6), insbesondere für einen Einschub eines elektrischen und/oder elektronischen und/oder optischen Schaltschranks, welcher in einer Führung (3,4) mit mehreren Einrastöffnungen (18) verschieblich gelagert ist, wobei die Verriegelungsvorrichtung über einen von außen zugänglichen Druckknopf (8) oder Schieber betätigbar ist,
**dadurch gekennzeichnet, dass**
am Einschub (6) ein mit dem Druckknopf (8) über ein Kupplungselement (20) in Wirkverbindung stehendes Verriegelungselement (29) angeordnet ist, welches am Einschub (6) entlang einer ersten, im wesentlichen senkrecht zu einer Einschubrichtung (Z) verlaufenden Verschiebungsrichtung (Y) verschieblich gelagert ist und welches unter Verschiebung des Einschubs (6) entlang der Einschubrichtung (Z) in unterschiedlichen Verriegelungspositionen mit stationären Einrastöffnungen (18) in verriegelnden Eingriff gebracht werden kann, und dass das erste Verriegelungselement (29) in einem Entriegelungsschieber (27) entlang der Verschiebungsrichtung (Y) verschieblich gelagert ist, welcher Entriegelungsschieber (27) am Einschub (6) seinerseits entlang einer zweiten, senkrecht zur Einschubrichtung (Z) und senkrecht zur ersten Verschiebungsrichtung (Y) verlaufenden zweiten Verschiebungsrichtung (X) gelagert ist,
wobei das Verriegelungselement (29) bei Betätigung des Druckknopfes (8) oder Schiebers aus dem verriegelnden Eingriff verschoben wird, und wobei bei betätigtem Druckknopf (8) respektive Schieber über an der Führung (3,4) vorgesehene stationäre Verschiebungselemente (16), welche den Entriegelungsschieber (27) entlang der zweiten Verschiebungsrichtung (X) versetzen, das Verriegelungselement (29) wieder freigegeben wird, so dass bei Verschiebung des Einschubs (6) entlang der Einschubrichtung (Z) das Verriegelungselement (29) bei erreichen der nächsten Verriegelungsposition in die nächste Einrastöffnung (18) einrastet.

2. Verriegelungsvorrichtung nach Anspruch 1, **dadurch gekennzeichnet, dass** es sich beim Kupplungselement um eine Schubstange (20) handelt, welche über eine Kulisse (55) mit einem in Einschubrichtung vorderseitig angeordneten Verriegelungsabschnitt (53) und einem in Einschubrichtung rückseitig angeordneten Entriegelungsabschnitt (54) verfügt, und dass das Verriegelungselement (29) über zwei entlang der zweiten Verschiebungsrichtung (X) versetzte Gegenkulissen (49,50) verfügt, wobei je nach Position des Entriegelungsschiebers (27) entlang der zweiten Verschiebungsrichtung (X) die erste oder die zweite Gegenkulisse (49,50) mit der Kulisse (55) der Schubstange (20) fluchtend angeordnet ist.

3. Verriegelungsvorrichtung nach Anspruch 2, **dadurch gekennzeichnet, dass** der Verriegelungsabschnitt (53) auf einem näher bei der Einrastöffnung (18) angeordneten Niveau in der ersten Verschiebungsrichtung (Y) angeordnet ist als der Entriegelungsabschnitt (54)" und dass durch hineindrücken des Druckknopfs (8) der Entriegelungsabschnitt (54) mit der Gegenkulisse (50) in das Verriegelungselement (29) verschiebenden Kontakt gebracht wird.

4. Verriegelungsvorrichtung nach einem der Ansprüche 2 oder 3, **dadurch gekennzeichnet, dass** das Verriegelungselement (29) gabelförmig ausgebildet ist, und die Gegenkulissen (49,50) zwischen den beiden Armen (43) des Verriegelungselements (29) angeordnet sind, und dass eine erste Gegenkulisse (50) auf einem näher bei der Einrastöffnung (18) angeordneten Niveau in der ersten Verschiebungsrichtung (Y) angeordnet ist und eine zweite Gegenkulisse (49) auf einem weiter entfernt von der Einrastöffnung (18) angeordneten Niveau in der ersten Verschiebungsrichtung (Y), wobei die erste Gegenkulisse (50) ohne Einwirkung eines Verschiebungselementes (16) mit der Schubstange (20) entlang der zweiten Verschiebungsrichtung (X) fluchtend angeordnet ist und die zweite Gegenkulisse (49) unter Einwirkung eines Verschiebungselementes (16) zur Schubstange (20) fluchtend verschoben wird, wobei bevorzugtermassen die Distanz zwischen dem Entriegelungsabschnitt (54) und der Führungslasche (5) größer ist als der Abstand zwischen einer Auflagefläche (51) des Verriegelungselements (29) und der ersten Gegenkulisse (50).

5. Verriegelungsvorrichtung nach einem der vorhergehenden Ansprüche, **dadurch gekennzeichnet, dass** die erste Verschiebungsrichtung (Y) in vertikaler Richtung angeordnet ist, und die zweite Verschiebungsrichtung (X) in horizontaler Richtung angeordnet ist.

6. Verriegelungsvorrichtung nach einem der vorhergehenden Ansprüche, **dadurch gekennzeichnet, dass** das Verriegelungselement (29) insbesondere über eine Feder, vorzugsweise über eine Blattfeder (39) in der ersten Verschiebungsrichtung (Y) gegen die Führung (3,4) verspannt ist, und dass der Entriegelungsschieber (27) insbesondere über eine Feder, vorzugsweise über eine Blattfeder (38) in der zweiten Verschiebungsrichtung (X) gegen die Führung (3, 4, 5,17), insbesondere gegen die daran angeordneten Verschiebungselemente (16), verspannt ist.

7. Verriegelungsvorrichtung nach einem der vorhergehenden Ansprüche, **dadurch gekennzeichnet, dass** am Einschub (6) ein Verriegelungsbauteil (21) befestigt ist, welches ein Gehäuse (24) aufweist, vorzugsweise aus zwei miteinander verbundenen Gehäuseelementen (25,26), und dass im Gehäuse (24) eine einseitige offene Ausnehmung (62) vorhanden ist, in welcher der Entriegelungsschieber (27) entlang der zweiten Verschiebungsrichtung (X) verschieblich gelagert ist, wobei vorzugsweise im Gehäuse erste Führungsmittel (33), insbesondere in Form von Nuten, angeordnet sind, in welche korrespondierende am Entriegelungsschieber (27) vorgesehene zweite Führungsmittel (34), insbesondere in Form von Führungszapfen, eingreifen, so dass die Führungsmittel (33,34) ausschließlich eine Verschiebung des Entriegelungsschiebers (27) entlang der zweiten Verschiebungsrichtung (X) innerhalb definierter Grenzen ermöglichen, wobei vorzugsweise zusätzlich am Entriegelungsschieber (27) Mittel (37) vorgesehen sind, über welche am Entriegelungsschieber (27) eine Blattfeder (38) befestigt werden kann, welche gegen die geschlossenseitige Wandung der Ausnehmung (62) verspannt.

8. Verriegelungsvorrichtung nach einem der vorhergehenden Ansprüche, **dadurch gekennzeichnet, dass** der Entriegelungsschieber (27) auf seiner den Verschiebungselementen (16) zugewandten Seite über eine in der zweiten Verschiebungsrichtung (X) zur Führung (3,4) hervortretende Erweiterung (28), insbesondere in Form einer gekrümmt oder gestuft ausgebildeten, sich entlang der ersten Verschiebungsrichtung (Y) erstreckenden Rippe, verfügt.

9. Verriegelungsvorrichtung nach einem der vorhergehenden Ansprüche, **dadurch gekennzeichnet, dass** die Führung eine im wesentlichen in einer horizontalen Ebene liegende Führungslasche (5) mit darin angeordneten Einrastöffnungen (18) umfasst, sowie eine im wesentlichen in einer vertikalen Ebene und bezüglich Einschub (6) in der zweiten Verschiebungsrichtung weiter außen angeordnete Seitenwand (17), wobei das Verriegelungselement (29) der Verriegelungsvorrichtung auf der Führungslasche (5) gleitet, und wobei die Verschiebungselemente (16) vorzugsweise in Form von diskreten Freiauslösungskuppen (16) in der Seitenwand (17) und zum Einschub (6) über diese hinausragend angeordnet sind.

10. Verriegelungsvorrichtung nach einem der vorhergehenden Ansprüche, **dadurch gekennzeichnet, dass** der Entriegelungsschieber (27) eine bevorzugtermassen als Durchgangsöffnung in der ersten Verschiebungsrichtung (Y) ausgebildete Ausnehmung (30) für das Verriegelungselement (29) aufweist, wobei bevorzugtermassen der Entriegelungsschieber (27) in der Ausnehmung (30) über Mittel (40,41) zur Lagerung einer Blattfeder (39) für das Verriegelungselement (29) verfügt, und/oder wobei weiterhin bevorzugtermassen die Ausnehmung (30) wenigstens abschnittsweise über Führungselemente (36), insbesondere in Form von Nuten und/oder Rippen, verfügt, welche derart mit korrespondierenden Führungselemente (46) des Verriegelungselements (29) in Eingriff stehen, dass das Verriegelungselement (29) nur entlang der ersten Verschiebungsrichtung (Y) im Entriegelungsschieber (27) verschoben werden kann, wobei vorzugsweise zusätzlich am Entriegelungsschieber (27) wenigstens eine Anschlagfläche (47) vorgesehen ist, welche unter Wechselwirkung mit einer korrespondierenden, am Verriegelungselement (29) vorgesehenen Anschlagfläche (48) einen Anschlag in der ersten Verschiebungsrichtung (Y) für das Verriegelungselement (29) im verriegelnden Zustand gewährleistet.

11. Verriegelungsvorrichtung nach einem der vorhergehenden Ansprüche, **dadurch gekennzeichnet, dass** es sich beim Kupplungselement (20) um eine Schubstange handelt, welche über einen in einem bügelförmigen Handgriff (7) angeordneten Druckknopf (8) von außen betätigt werden kann, und welche Schubstange mit einer Rückstellfeder (61), vorzugsweise in Form einer Spiralfeder als Druckfeder, gegen die Einschubrichtung (Z) verspannt ist.

12. Verriegelungsvorrichtung nach einem der vorhergehenden Ansprüche, **dadurch gekennzeichnet, dass** der Entriegelungsschieber (27) über eine in Einschubrichtung (Z) verlaufende Durchgangsöffnung (42) verfügt, in welcher das Kupplungselement in Form einer Schubstange (20) geführt ist, wobei vorzugsweise an der Frontplatte (11) an dem mit der Schubstange (20) in Wirkverbindung stehenden Druckknopf (8) und/oder im Gehäuse (24) und/oder im Entriegelungsschieber (27) ein vorderer Anschlagspunkt für die Schubstange (20) angeordnet ist, wobei die Schubstange (20) an ihrem vorderseitigen freien Ende über einen vorderen Führungsabschnitt (52) zum geführten Eingriff in der Durchgangsöffnung (63) verfügt.

13. Einschub (6) für eine elektrische und/oder elektronische und/oder optische Verteilereinheit, insbesondere in Form eines Schaltschrankes, mit einer Verriegelungsvorrichtung nach einem der vorhergehenden Ansprüche, wobei vorzugsweise im Falle eines Ganzeinschubs pro Einschub zwei derartige Verriegelungsvorrichtungen, auf jeder Seite eine und jeweils über einen individuellen Handgriff und Druckknopf betätigbar vorhanden ist, und im Falle eines Teileinschubs pro Einschub eine einzige derartige Verriegelungsvorrichtung vorhanden ist, vorzugsweise die Verriegelungsvorrichtung jeweils an einer oberen seitlichen Führung des Einschubs (6) vorgesehen ist.

## Claims

1. Locking apparatus for an insert (6), in particular for an insert of an electrical and/or electronic and/or optical switchgear cabinet, which is mounted such that it can move in a guide (3, 4) having a plurality of latching openings (18), in which case the locking apparatus can be operated via an externally accessible push button (8) or slide,
**characterized in that**
a locking element (29) is arranged on the insert (6), which locking element (29) is operatively connected to the push button (8) via a coupling element (20), is mounted on the insert (6) such that it can move along a first movement direction (Y), which runs essentially at right angles to an insertion direction (Z), and can be made to engage in a locking manner with stationary latching openings (18) in different locking positions, with the insert (6) being moved along the insertion direction (Z), and **in that** the first locking element (29) is mounted in an unlocking slide (27) such that it can move along the movement direction (Y), which unlocking slide (27) is itself mounted on the insert (6) along a second movement direction (X), which runs at right angles to the insertion direction (Z) and at right angles to the first movement direction (Y),
with the locking element (29) being moved out of the locking engagement when the push button (8) or slide is operated, and with the locking element (29) being released again via stationary movement elements (16), which are provided on the guide (3, 4) and cause the unlocking slide (27) to move along the second movement direction (X), such that, when the insert (6) is moved along the insertion direction (Z), the locking element (29) latches in the next latching opening (18) when the next locking position is reached.

2. Locking apparatus according to Claim 1, **characterized in that** the coupling element is a push rod (20), which has a slotted-link guide (55) having a locking section (53), which is arranged at the front in the insertion direction, and an unlocking section (54), which is arranged at the rear in the insertion direction, and **in that** the locking element (29) has two opposing slotted-link guides (49, 50), which are caused to move along the second movement direction (X), with the first or the second opposing slotted-link guide (49, 50) being arranged such that it is aligned with the slotted-link guide (55) of the push rod (20), depending on the position of the unlocking slide (27) along the second movement direction (X).

3. Locking apparatus according to Claim 2, **characterized in that** the locking section (53) is arranged on a level, which is arranged closer to the latching opening (18), in the first movement direction (Y) than the unlocking section (54), and **in that**, when the push button (8) is pushed in, the unlocking section (54) is brought into contact with the opposing slotted-link guide (50), moving in the locking element (29).

4. Locking apparatus according to one of Claims 2 or 3, **characterized in that** the locking element (29) is in the form of a fork, and the opposing slotted-link guides (49, 50) are arranged between the two arms (43) of the locking element (29), and **in that** a first opposing slotted-link guide (50) is arranged on a level, which is arranged closer to the latching opening (18), in the first movement direction (Y), and the second opposing slotted-link guide (49) is arranged on a level, which is arranged further away from the latching opening (18), in the first movement direction (Y), with the first slotted-link guide (50) being arranged aligned with the push rod (20) along the second movement direction (X), without any influence of a movement element (16), and with the second opposing slotted-link guide (49) being moved so that it is aligned with the push rod (20), under the influence of a movement element (16), with the distance between the unlocking section (54) and the guide lug (5) preferably being greater than the distance between a rest surface (51) of the locking element (29) and the first opposing slotted-link guide (50).

5. Locking apparatus according to one of the preceding claims, **characterized in that** the first movement direction (Y) is arranged in the vertical direction, and the second movement direction (X) is arranged in the horizontal direction.

6. Locking apparatus according to one of the preceding claims, **characterized in that** the locking element (29) is braced in the first movement direction (Y) against the guide (3, 4), in particular via a spring, preferably via a leaf spring (39), and **in that** the unlocking slide (27) is braced against the guide (3, 4, 5, 17), in particular against the movement elements (16) which are arranged on it, in the second movement direction (X) in particular via a spring, preferably via a leaf spring (38).

7. Locking apparatus according to one of the preceding claims, **characterized in that** a locking component (21) is attached to the insert (6) and has a housing (24), preferably composed of two housing elements (25, 26) which are connected to one another, and **in that** a recess (62) which is open on one side is provided in the housing (24), in which recess (62) the unlocking slide (27) is mounted such that it can move along the second movement direction (X), with a first guide means (33), in particular in the form of grooves, preferably being arranged in the housing, in which grooves corresponding second guide means (34) engage, which second guide means (34) are provided on the unlocking slide (27) and are in particular in the form of guide pins, such that the guide means (33, 34) exclusively allow a movement of the unlocking slide (27) along the second movement direction (X) within defined limits, with means (37) preferably additionally being provided on the unlocking slide (27), via which means (37) a leaf spring (38) can be attached to the unlocking slide (27) and provides bracing against the closed-side wall of the recess (62).

8. Locking apparatus according to one of the preceding claims, **characterized in that**, on its side which is facing the movement elements (16), the unlocking slide (27) has a protruding area (28), which projects in the second movement direction (X) with respect to the guide (3, 4), in particular in the form of a rib which is designed to be curved or stepped and extends along the first movement direction (Y).

9. Locking apparatus according to one of the preceding claims, **characterized in that** the guide comprises a guide lug (5), which is located essentially on a horizontal plane and has latching openings (18) arranged in it, as well as a side wall (17), which is arranged essentially on a vertical plane and further outputs than the insert (6) in the second movement direction, with the locking element (29) of the locking apparatus sliding on the guide lug (5), and with the movement elements (16) preferably being arranged in the form of discrete release studs (16) in the side wall (17) and projecting beyond them with respect to the insert (6).

10. Locking apparatus according to one of the preceding claims, **characterized in that** the unlocking slide (27) has a recess (30) for the locking element (29), which recess (30) is preferably in the form of an aperture opening in the first movement direction (Y), with the unlocking slide (27) preferably having means (40, 41) in the recess (30) for bearing a leaf spring (39) for the locking element (29), and/or the recess (30) preferably furthermore has, at least in places, guide elements (36), in particular in the form of grooves and/or ribs, which engage with corresponding guide elements (46) on the locking element (29) such that the locking element (29) can be moved only along the first movement direction (Y) in the unlocking slide (27), with at least one stop surface (47) preferably additionally being provided on the unlocking slide (27), which stop surface (47) interacts with a corresponding stop surface (48), which is provided on the locking element (29), in order to ensure a stop in the first movement direction (Y) for the locking element (29) in the locking state.

11. Locking apparatus according to one of the preceding claims, **characterized in that** the coupling element (20) is a push rod which can be operated from the outside via a push button (8) which is arranged in a handle (7), which is in the form of a bracket, and which push rod is braced by a return spring (61), preferably in the form of a spiral spring as a compression spring, in the opposite direction to the insertion direction (Z).

12. Locking apparatus according to one of the preceding claims, **characterized in that** the unlocking slide (27) has an aperture opening (42), which runs in the insertion direction (Z) and in which the coupling element is guided in the form of a push rod (20), with a front stop point for the push rod (20) preferably being arranged on the front panel (11) on the push button (8) which is operatively connected to the push rod (20) and/or in the housing (24) and/or in the unlocking slide (27), with the push rod (20) having a front guide section (52) at its front free end for guided engagement in the aperture opening (63).

13. Insert (6) for an electrical and/or electronic and/or optical distribution unit, in particular in the form of a switchgear cabinet, having a locking apparatus according to one of the preceding claims, with two such locking apparatuses preferably being provided for each insert in the case of an entire insert, one on each side and each operable via an individual handle or push button, and with a single such locking apparatus being provided for each insert in the case of a partial insert, with the locking apparatus preferably in each case being provided on an upper side guide of the insert (6).

## Revendications

1. Dispositif de verrouillage pour un tiroir (6), en particulier pour un tiroir d'une armoire de commande électrique et/ou électronique et/ou optique, lequel est monté coulissant dans un guide (3, 4) pourvu de plusieurs ouvertures d'encliquetage (18), le dispositif de verrouillage pouvant être actionné au moyen d'un bouton-poussoir (8) ou d'un coulisseau accessible depuis l'extérieur,
**caractérisé**
**en ce qu'**un élément de verrouillage (29) en liaison fonctionnelle avec le bouton-poussoir (8) par le biais d'un élément d'accouplement (20) est disposé sur le tiroir (6), lequel élément de verrouillage est monté coulissant sur le tiroir (6) le long d'une première direction de coulissement (Y) s'étendant essentiellement perpendiculairement à une direction d'insertion (Z) et lequel élément de verrouillage peut être amené en engagement de verrouillage dans différentes positions de verrouillage avec des ouvertures d'encliquetage (18) fixes en coulissant le tiroir (6) le long de la direction d'insertion (Z),
et **en ce que** le premier élément de verrouillage (29) est monté coulissant dans un coulisseau de déverrouillage (27) le long de la direction de coulissement (Y), lequel coulisseau de déverrouillage (27) est pour sa part monté sur le tiroir (6) le long d'une deuxième direction de coulissement (X) s'étendant perpendiculairement à la direction d'insertion (Z) et perpendiculairement à la première direction de coulissement (Y),
l'élément de verrouillage (29) étant coulissé hors de l'engagement de verrouillage lors de l'actionnement du bouton-poussoir (8) ou du coulisseau et, lorsque le bouton-poussoir (8), respectivement le coulisseau, est actionné, l'élément de verrouillage (29) étant à nouveau libéré au moyen d'éléments de coulissement (16) fixes prévus sur le guide (3, 4), lesquels décalent le coulisseau de déverrouillage (27) le long de la deuxième direction de coulissement (X), de telle sorte que lors du coulissement du tiroir (6) le long de la direction d'insertion (Z), l'élément de verrouillage (29) s'encliquète dans l'ouverture d'encliquetage (18) suivante lorsque la position de verrouillage suivante est atteinte.

2. Dispositif de verrouillage selon la revendication 1, **caractérisé en ce que** l'élément d'accouplement est une tige de poussée (20), laquelle possède une coulisse (55) pourvue d'une section de verrouillage (53) disposée du côté avant dans la direction d'insertion et d'une section de déverrouillage (54) disposée du côté arrière dans la direction d'insertion, et **en ce que** l'élément de verrouillage (29) possède deux coulisses conjuguées (49, 50) décalées le long de la deuxième direction de coulissement (X), la première ou la deuxième coulisse conjuguée (49, 50) étant disposée en alignement avec la coulisse (55) de la tige de poussée (20), en fonction de la position du coulisseau de déverrouillage (27) le long de la deuxième direction de coulissement (X).

3. Dispositif de verrouillage selon la revendication 2, **caractérisé en ce que** la section de verrouillage (53) est disposée à un niveau plus proche de l'ouverture d'encliquetage (18) dans la première direction de coulissement (Y) que la section de déverrouillage (54), et **en ce que**, par enfoncement du bouton-poussoir (8), la section de déverrouillage (54) est amenée en contact coulissant avec la coulisse conjuguée (50) dans l'élément de verrouillage (29).

4. Dispositif de verrouillage selon l'une quelconque des revendications 2 et 3, **caractérisé en ce que** l'élément de verrouillage (29) est réalisé en forme de fourche, et les coulisses conjuguées (49, 50) sont disposées entre les deux bras (43) de l'élément de verrouillage (29), et **en ce qu'**une première coulisse conjuguée (50) est disposée à un niveau plus proche de l'ouverture d'encliquetage (18) dans la première direction de coulissement (Y) et une deuxième coulisse conjuguée (49) est disposée à un niveau plus éloigné de l'ouverture d'encliquetage (18) dans la première direction de coulissement (Y), la première coulisse conjuguée (50) étant disposée, sans l'action d'un élément de coulissement (16), en alignement avec la tige de poussée (20) le long de la deuxième direction de coulissement (X), et la deuxième coulisse conjuguée (49) étant coulissée, sous l'action d'un élément de coulissement (16), en alignement par rapport à la tige de poussée (20), la distance entre la section de déverrouillage (54) et la languette de guidage (5) étant de préférence supérieure à la distance entre une surface d'appui (51) de l'élément de verrouillage (29) et la première coulisse conjuguée (50).

5. Dispositif de verrouillage selon l'une quelconque des revendications précédentes, **caractérisé en ce que** la première direction de coulissement (Y) est située dans la direction verticale, et la deuxième direction de coulissement (X) est située dans la direction horizontale.

6. Dispositif de verrouillage selon l'une quelconque des revendications précédentes, **caractérisé en ce que** l'élément de verrouillage (29) est serré contre le guide (3, 4) dans la première direction de coulissement (Y), en particulier au moyen d'un ressort, de préférence au moyen d'un ressort à lame (39), et **en ce que** le coulisseau de déverrouillage (27) est serré contre le guide (3, 4, 5, 17), en particulier contre les éléments de coulissement (16) disposés sur celui-ci, dans la deuxième direction de coulissement (X), en particulier au moyen d'un ressort, de préférence au moyen d'un ressort à lame (38).

7. Dispositif de verrouillage selon l'une quelconque des revendications précédentes, **caractérisé en ce qu'**un composant de verrouillage (21) est fixé sur le tiroir (6), lequel composant de verrouillage comprend un boîtier (24), de préférence constitué de deux éléments de boîtier (25, 26) reliés l'un à l'autre, et **en ce qu'**un évidement (62) ouvert d'un côté est présent dans le boîtier (24), dans lequel évidement est monté coulissant le coulisseau de déverrouillage (27) le long de la deuxième direction de coulissement (X), des premiers moyens de guidage (33), en particulier sous forme de rainures, étant disposés de préférence dans le boîtier, dans lesquels s'engagent des deuxièmes moyens de guidage (34), en particulier sous forme de goupilles de guidage, correspondants prévus sur le coulisseau de déverrouillage (27), de telle sorte que les moyens de guidage (33, 34) permettent exclusivement un coulissement du coulisseau de déverrouillage (27) le long de la deuxième direction de coulissement (X) dans des limites définies, des moyens (37) étant de préférence en outre prévus sur le coulisseau de déverrouillage (27), au moyen desquels un ressort à lame (38) peut être fixé sur le coulisseau de déverrouillage (27), lequel ressort à lame est serré contre la paroi située du côté fermé de l'évidement (62).

8. Dispositif de verrouillage selon l'une quelconque des revendications précédentes, **caractérisé en ce que**, sur son côté tourné vers les éléments de coulissement (16), le coulisseau de déverrouillage (27) possède un élargissement (28) faisant saillie vers le guide (3, 4) dans la deuxième direction de coulissement (X), en particulier sous la forme d'une nervure courbée ou étagée s'étendant le long de la première direction de coulissement (Y).

9. Dispositif de verrouillage selon l'une quelconque des revendications précédentes, **caractérisé en ce que** le guide comporte une languette de guidage (5) située essentiellement dans un plan horizontal et pourvue d'ouvertures d'encliquetage (18) disposées dans celle-ci, ainsi qu'une paroi latérale (17) disposée essentiellement dans un plan vertical et plus à l'extérieur par rapport au tiroir (6) dans la deuxième direction de coulissement, l'élément de verrouillage (29) du dispositif de verrouillage glissant sur la languette de guidage (5), et les éléments de coulissement (16) de préférence sous forme de dômes de déclenchement libre (16) distincts étant disposés dans la paroi latérale (17) et de manière à faire saillie au-delà de celle-ci en direction du tiroir (6).

10. Dispositif de verrouillage selon l'une quelconque des revendications précédentes, **caractérisé en ce que** le coulisseau de déverrouillage (27) comprend un évidement (30), réalisé de préférence sous forme d'ouverture traversante dans la première direction de coulissement (Y), pour l'élément de verrouillage (29), le coulisseau de déverrouillage (27) dans l'évidement (30) possédant de préférence des moyens (40, 41) de montage d'un ressort à lame (39) pour l'élément de verrouillage (29), et/ou en outre, de préférence, l'évidement (30) possédant, au moins par sections, des éléments de guidage (36), en particulier sous forme de rainures et/ou de nervures, lesquelles sont en engagement avec des éléments de guidage (46) correspondants de l'élément de verrouillage (29) de telle sorte que l'élément de verrouillage (29) ne puisse être coulissé que le long de la première direction de coulissement (Y) dans le coulisseau de déverrouillage (27), au moins une surface de butée (47) étant de préférence en outre prévue sur le coulisseau de déverrouillage (27), laquelle assure, par interaction avec une surface de butée (48) correspondante prévue sur l'élément de verrouillage (29), une butée dans la première direction de coulissement (Y) pour l'élément de verrouillage (29) dans l'état verrouillé.

11. Dispositif de verrouillage selon l'une quelconque des revendications précédentes, **caractérisé en ce que** l'élément d'accouplement (20) est une tige de poussée, laquelle peut être actionnée depuis l'extérieur au moyen d'un bouton-poussoir (8) disposé dans une poignée (7) en forme d'arceau, et laquelle tige de poussée est serrée vers la direction d'insertion (Z) à l'aide d'un ressort de rappel (61), de préférence sous forme de ressort spiral faisant office de ressort de compression.

12. Dispositif de verrouillage selon l'une quelconque des revendications précédentes, **caractérisé en ce que** le coulisseau de déverrouillage (27) possède une ouverture traversante (42) s'étendant dans la direction d'insertion (Z), dans laquelle ouverture traversante est guidé l'élément d'accouplement sous la forme d'une tige de poussée (20), un point de butée avant pour la tige de poussée (20) étant disposé de préférence sur la plaque avant (11) sur le bouton-poussoir (8) en liaison fonctionnelle avec la tige de poussée (20) et/ou dans le boîtier (24) et/ou dans le coulisseau de déverrouillage (27), la tige de poussée (20) possédant, à son extrémité libre située du côté avant, une section de guidage avant (52) en vue de l'engagement guidé dans l'ouverture traversante (63).

13. Tiroir (6) pour une unité de distribution électrique et/ou électronique et/ou optique, en particulier sous la forme d'une armoire de commande, comprenant un dispositif de verrouillage selon l'une quelconque des revendications précédentes, deux dispositifs de verrouillage de ce type, un de chaque côté et pouvant respectivement être actionnés au moyen d'une poignée individuelle et d'un bouton-poussoir, étant prévus pour chaque tiroir de préférence dans le cas d'un tiroir entier, et un dispositif de verrouillage de ce type unique étant prévu pour chaque tiroir dans le cas d'un tiroir partiel, le dispositif de verrouillage étant de préférence prévu respectivement sur un guide latéral supérieur du tiroir (6).
